(19) Europäisches Patentamt
European Patent Office
Office européen des brevets

(11) EP 4 503 167 A1

(12) EUROPEAN PATENT APPLICATION
published in accordance with Art. 153(4) EPC

(43) Date of publication:
**05.02.2025 Bulletin 2025/06**

(21) Application number: **23777678.6**

(22) Date of filing: **16.02.2023**

(51) International Patent Classification (IPC):
***H01M 4/13*** *(2010.01)* ***H01M 4/62*** *(2006.01)*

(52) Cooperative Patent Classification (CPC):
**H01M 4/136; C09D 5/24; C09D 133/02; C09D 133/08; H01M 4/0404; H01M 4/13; H01M 4/137; H01M 4/525; H01M 4/587; H01M 4/62; H01M 4/622; H01M 4/625; H01M 4/66; H01M 4/667; H01M 4/668;** (Cont.)

(86) International application number:
**PCT/CN2023/076367**

(87) International publication number:
**WO 2023/185299 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 CN 202210333061**

(71) Applicant: **Contemporary Amperex Technology Co., Limited**
**Ningde, Fujian 352100 (CN)**

(72) Inventors:
- **FAN, Yanhuang**
  **Ningde, Fujian 352100 (CN)**
- **FENG, Lingyun**
  **Ningde, Fujian 352100 (CN)**

(74) Representative: **Gong, Jinping**
**CocreateIP**
**Neumarkterstr. 21**
**81673 München (DE)**

# (54) POSITIVE ELECTRODE PLATE, SECONDARY BATTERY, AND ELECTRIC DEVICE

(57) The present application provides a positive electrode plate, a secondary battery, and an electrical apparatus. The positive electrode plate comprises a positive electrode current collector, a positive electrode film layer arranged on at least one surface of the positive electrode current collector, and a conductive priming coat located between the positive electrode current collector and the positive electrode film layer, where the positive electrode film layer comprises a positive electrode active material, the positive electrode active material has a specific surface area of 15 $m^2/g$-25 $m^2/g$, a coating weight on one side of the positive electrode current collector is 20 $mg/cm^2$-40 $mg/cm^2$, and the conductive priming coat comprises a first polymer, a first water-based binder, and a first conductive agent.

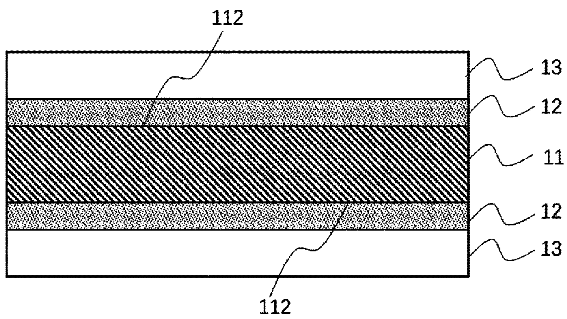


FIG. 1

EP 4 503 167 A1

(52) Cooperative Patent Classification (CPC): (Cont.)
**H01M 10/05; H01M 10/052; H01M 10/0525;**
**H01M 10/4235;** H01M 2004/028; H01M 2220/20;
Y02E 60/10

## Description

### Technical Field

The present application relates to the technical field of batteries, and particularly relates to a positive electrode plate, a secondary battery, and an electrical apparatus.

### Background

In recent years, as secondary batteries are increasingly widely applied in energy storage power systems, such as water, fire, wind, and solar power stations, as well as many fields, such as electric tools, electric bicycles, electric motorcycles, electric vehicles, military equipment, and aerospace. Due to great development of the secondary batteries, higher requirements are presented for, e.g., energy density and cycling performance thereof.
According to a relevant technology, a conductive priming coat is arranged between an active material and a current collector of a positive electrode plate to improve performance of a secondary battery.
To further improve the battery performance, better positive electrode plates are required for the prior art.

### Summary of the Invention

In view of the above problem, the present application provides a novel positive electrode plate, a secondary battery, and an electrical apparatus. The novel positive electrode plate comprises a novel conductive priming coat, as described below respectively.
A first aspect of the present application provides a positive electrode plate, comprising a positive electrode current collector, a positive electrode film layer arranged on at least one surface of the positive electrode current collector, and a conductive priming coat arranged between the positive electrode current collector and the positive electrode film layer, where

the positive electrode film layer comprises a positive electrode active material, a specific surface area of the positive electrode active material is 15 $m^2/g$-25 $m^2/g$, and a coating weight on one side of the positive electrode current collector is 20 $mg/cm^2$-40 $mg/cm^2$;
the conductive priming coat comprises a first polymer, a first water-based binder, and a first conductive agent, and the first polymer comprises:

a first monomer unit represented by formula 1;
a second monomer unit that is at least one selected from the group consisting of a monomer unit represented by formula 2 and a monomer unit represented by formula 3;
a third monomer unit that is at least one selected from the group consisting of a monomer unit represented by formula 4 and a monomer unit represented by formula 5; and
a fourth monomer unit represented by formula 6, where $R^1$, $R^2$, and $R^3$ each independently represent H, carboxyl, an ester group, and a substituted or unsubstituted radical of C1-C10 alkyl, C1-C10 alkoxy, C2-C10 alkenyl, or C6-C10 aryl, and $R^4$ represents H and a substituted or unsubstituted radical of: C1-C10 alkyl, C1-C10 alkoxy, C2-C10 alkenyl, or C6-C10 aryl;

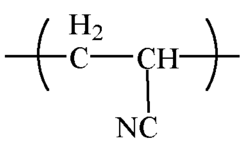

formula 1

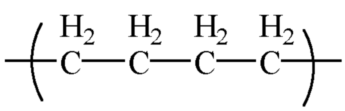

formula 2

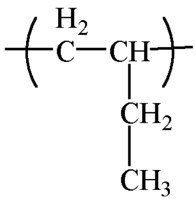

formula 3

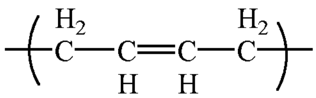

formula 4

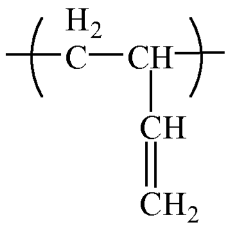

formula 5,

and

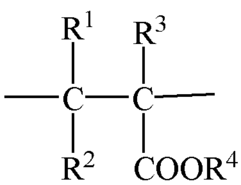

formula 6.

In some embodiments, based on the total mass of the first polymer,

a percentage mass content of the first monomer unit is M1, where M1 is 10%-55%, and is optionally 25%-55%; and/or
a percentage mass content of the second monomer unit is M2, where M2 is 40%-80%, and is optionally 50%-70%; and/or
a percentage mass content of the third monomer unit is M3, where M3 is 0%-10%, and is optionally 0.001%-2%; and/or
a percentage mass content of the fourth monomer unit is M4, where M4 is 0%-10%, and is optionally 0.1%-1%.

In some embodiments, M3/(M2+M3) is 0%-5%, optionally 0.001%-1%.

In some embodiments, the first polymer comprises one or more selected from hydrogenated nitrile butadiene rubber or hydrogenated carboxyl nitrile butadiene rubber; and/or
the weight average molecular weight of the first polymer is 50,000-1,500,000, and is optionally 200,000-400,000.

In some embodiments, the first water-based binder comprises one or more selected from a water-based polyacrylic resin and a derivative thereof, a water-based amino-modified polypropylene resin and a derivative thereof, or a polyvinyl alcohol and a derivative thereof, and optionally comprises a copolymer selected from water-based acrylic acid-acrylate copolymers; and/or
the weight average molecular weight of the first water-based binder is 200,000-1,500,000, and is optionally 300,000-400,000.

In some embodiments, the first conductive agent includes one or more selected from superconducting carbon, conductive graphite, acetylene black, carbon black, Ketjen black, carbon dot, carbon nanotube, graphene, or carbon nanofiber, and optionally comprises one or more selected from carbon nanotube, graphene, or carbon nanofiber.

In some embodiments, based on a total mass of the conductive priming coat,

a percentage mass content of the first polymer is X1, where X1 is 5%-20%, and is optionally 5%-10%; and/or
a percentage mass content of the first water-based binder is X2, where X2 is 30%-80%, and is optionally 40%-50%; and/or
a percentage mass content of the first conductive agent is X3, where X3 is 10%-50%, and is optionally 40%-50%.

In some embodiments, a thickness of the conductive priming coat is 1 μm-20 μm, and is optionally 3 μm-10 μm.
In some embodiments, the positive electrode film layer further comprises one or more selected from an infiltrant or a dispersant, and optionally, the positive electrode film layer further comprises both an infiltrant and a dispersant.
In some embodiments, the infiltrant has a surface tension of 20 mN/m-40 mN/m, and optionally, the infiltrant comprises at least one functional group among: -CN, $-NH_2$, -NH-, -N-, -OH, -COO-, and -C(=O)-O-C (=O)-.
In some embodiments, the infiltrant includes one or more selected from a small molecular organic solvent or a polymer of low molecular weight,

optionally, the small molecular organic solvent includes one or more selected from an alcohol amine, an alcohol, or a nitrile, and optionally, the number of carbon atoms of the alcohol amine is 1-16, and is optionally 2-6; and optionally, the polymer of low molecular weight comprises one or more selected from a maleic anhydride-styrene copolymer, polyvinylpyrrolidinone, or polysiloxane, and optionally, the weight average molecular weight of the polymer of low molecular weight is below 6,000 and is optionally 3,000-6,000.

In some embodiments, the dispersant comprises a second polymer, and the second polymer comprises:

a fifth monomer unit represented by formula 7;
a sixth monomer unit that is at least one selected from the group consisting of a monomer unit represented by formula 8 and a monomer unit represented by formula 9; and
a seventh monomer unit that is at least one selected from the group consisting of a monomer unit represented by formula 10 and a monomer unit represented by formula 11;

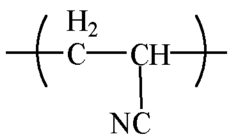

formula 7

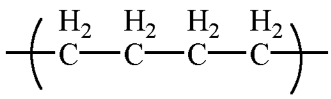

formula 8

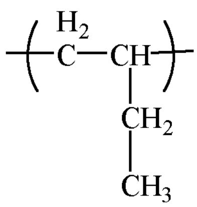

formula 9

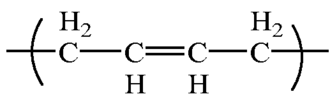

formula 10,

and

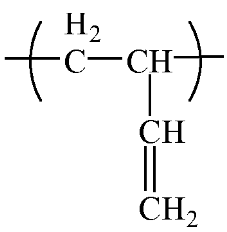

formula 11.

In some embodiments, based on the total mass of the second polymer,

a percentage mass content of the fifth monomer unit is M5, where M5 is 10%-55%, and is optionally 25%-55%; and/or

a percentage mass content of the sixth monomer unit is M6, where M6 is 40%-80%, and is optionally 40%-70%; and/or
a percentage mass content of the seventh monomer unit is M7, where M7 is 0%-10%, and is optionally 0.001%-2%.

In some embodiments, M7/(M6+M7) is 0%-5% and is optionally 0.001%-1%.

In some embodiments, the second polymer is hydrogenated nitrile butadiene rubber; and/or
the weight average molecular weight of the second polymer is 50,000-500,000, and is optionally 150,000-350,000.

In some embodiments, based on a total mass of the positive electrode film layer,

a percentage mass content of the dispersant is Y1, where Y1 is 0.05%-1%, and is optionally 0.1%-0.5%; and/or
a percentage mass content of the infiltrant is Y2, where Y2 is 0.05%-2%, and is optionally 0.2%-0.8%.

In some embodiments, Y1/Y2 is 0.05-20, is optionally 0.1-1, and is further 0.3-0.8.

In some embodiments, in the positive electrode plate, a mass ratio of the first polymer to the second polymer is 1.5-5, and is optionally 2-3.

In some embodiments, the positive electrode active material comprises $Li_{1+x}Fe_{1-y}A_yP_{1-z}R_zO_4$,

$-0.100 \le x \le 0.100$;
$0 \le y \le 1$, optionally $0.001 \le y \le 0.500$;
$0 \le z \le 0.100$, optionally $0.001 \le z \le 0.100$;
the A is selected from one or more of Zn, Al, Na, K, Mg, Mo, W, Ti, V, Zr, Mn, Ni, Co, Ga, Sn, Sb, Nb, and Ge, and is optionally one or more of Mn, Ti, V, Ni, Co, and Mg, and
the R is selected from one or more of B, Si, N, and S.

In some embodiments, a surface of the positive electrode active material is coated with carbon.

In some embodiments, a volume particle size Dv50 of the positive electrode active material is 0.3 μm-1.5 μm.

A second aspect of the present application provides a secondary battery, comprising the positive electrode plate in any one of the above embodiments.

A third aspect of the present application provides an electrical apparatus, comprising the above secondary battery.

Beneficial effects

One or more embodiments of the present application have one or more of the following beneficial effects:

(1) When the positive electrode active material has a large specific surface area (BET) and many small particles, a weak binding strength between the positive electrode active material and the current collector (aluminum foil) tends to be caused, and a defilming phenomenon tends to occur in a coating process. For example, the specific surface area of the positive electrode active material is 15 $m^2/g$-25 $m^2/g$, a coating weight on one side of the positive electrode current collector is 20 $mg/cm^2$-40 $mg/cm^2$, and the defilming phenomenon tends to occur in the coating process. In the present application, a novel conductive priming coat is used to increase a bonding strength between the positive electrode active material layer and the current collector.

(2) When a positive electrode active material slurry (comprising a solvent N-methylpyrrolidine, abbreviated as NMP) is coated on a surface of the conductive priming coat, the first polymer in the conductive priming coat will be re-dissolved after contact with the solvent NMP, thereby resulting in mutual diffusion between the priming coat and the positive electrode active material slurry, and after the priming coat is cured, the active material layer can be integrated with the priming coat, thereby effectively increasing the binding strength between the positive electrode film layer and the positive electrode current collector.

(3) When an acrylic acid-acrylate copolymer (weight average molecular weight: 200,000-1,500,000) is used for the first water-based binder in the conductive priming coat, the strong polarity of the binder can achieve good binding to the current collector (aluminum foil). In addition, the acrylic acid-acrylate copolymer in an electrolyte solution has good stability, high temperature resistance, corrosion resistance, and low absorption efficiency of electrolyte solution (low swelling degree).

(4) When the conductive agent in the conductive priming coat is selected from one or two of carbon black, acetylene black, carbon fiber, graphite, and carbon nanotube, it can reduce the interfacial resistance, improve the charging rate and discharging rate performance of the battery, and extend the cycle life of the battery.

**Description of Drawings**

Fig. 1 is a schematic diagram of a positive electrode plate according to an example of the present application.
Fig. 2 is a schematic flowchart of measuring a bonding force of an electrode plate according to an example of the present application.
Fig. 3 is a schematic diagram of a secondary battery according to an embodiment of the present application.
Fig. 4 is an exploded view of the secondary battery according to an embodiment of the present application shown in Fig. 3.
Fig. 5 is a schematic diagram of a battery module according to an embodiment of the present application.
Fig. 6 is a schematic diagram of a battery pack according to an embodiment of the present application.
Fig. 7 is an exploded view of the battery pack according to an embodiment of the present application shown in Fig. 6.
Fig. 8 is a schematic diagram of an electrical apparatus in which a secondary battery is used as a power source according to an embodiment of the present application.

Description of reference numerals:
1 battery pack; 2 upper box body; 3 lower box body; 4 battery module; 5 secondary battery; 51 case; 52 electrode assembly; 53 top cover assembly; 11 positive electrode current collector; 112 surface; 12 conductive priming coat; 13 positive electrode film layer; 510 steel plate; 520 double-sided tape; and 530 electrode plate.

**Detailed Description**

Embodiments of a negative electrode active material, a manufacturing method therefor, a positive electrode plate, a negative electrode plate, a secondary battery, a battery module, a battery pack, and an apparatus in the present application are specifically disclosed below by referring to the detailed description of drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.
"Ranges" disclosed in the present application are defined in the form of lower limits and upper limits, a given range is defined by the selection of a lower limit and an upper limit, and the selected lower limits and upper limits define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.
Unless otherwise specified, all embodiments and optional embodiments of the present application may be combined with each other to form new technical solutions.
Unless otherwise specified, all technical features and optional technical features of the present application may be combined with each other to form new technical solutions.
Unless otherwise specified, all steps of the present application may be performed sequentially or randomly, and preferably sequentially. For example, the method includes steps (a) and (b), which means that the method may include steps (a) and (b) performed sequentially, or may include steps (b) and (a) performed sequentially. For example, the reference to the method may further comprise step (c), which means that step (c) may be added to the method in any order, for example, the method may comprise steps (a), (b) and (c), or may comprise steps (a), (c) and (b), or may comprise steps (c), (a) and (b), and so on.
Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.
Unless otherwise specifically stated, the term "or" is inclusive in the present application. For example, the phrase

"A or B" means "A, B, or both A and B." More specifically, the condition "A or B" is satisfied under any one of the following conditions: A is true (or present) and B is false (or absent); A is false (or absent) and B is true (or present); or both A and B are true (or present).

[Secondary battery]

Secondary batteries, also known as rechargeable batteries or storage batteries, refer to batteries that, after being discharged, can activate active materials by charging for continuous use.

In general, the secondary battery comprises a positive electrode plate, a negative electrode plate, a separator, and an electrolyte solution. During charging and discharging of the battery, active ions (e.g., lithium ions) are intercalated and de-intercalated back and forth between the positive electrode plate and the negative electrode plate. The separator is provided between the positive electrode plate and the negative electrode plate, and mainly functions to prevent a short circuit between the positive electrode and the negative electrode while allowing active ions to pass through. The electrolyte solution serves for conducting the active ions between the positive electrode plate and the negative electrode plate.

[Positive electrode plate]

In some embodiments, the first aspect of the present application provides a positive electrode plate, comprising a positive electrode current collector, a positive electrode film layer arranged on at least one surface of the positive electrode current collector, and a conductive priming coat arranged between the positive electrode current collector and the positive electrode film layer, where

the positive electrode film layer comprises a positive electrode active material, a specific surface area of the positive electrode active material is 15 $m^2/g$-25 $m^2/g$, and a coating weight on one side of the positive electrode current collector is 20 $mg/cm^2$-40 $mg/cm^2$;
the conductive priming coat comprises a first polymer, a first water-based binder, and a first conductive agent, and the first polymer comprises:

a first monomer unit represented by formula 1;
a second monomer unit that is at least one selected from the group consisting of a monomer unit represented by formula 2 and a monomer unit represented by formula 3;
a third monomer unit that is at least one selected from the group consisting of a monomer unit represented by formula 4 and a monomer unit represented by formula 5; and
a fourth monomer unit represented by formula 6, where $R^1$, $R^2$, and $R^3$ each independently represent H, carboxyl, an ester group, and a substituted or unsubstituted radical of C1-C10 alkyl, C1-C10 alkoxy, C2-C10 alkenyl, or C6-C10 aryl, and $R^4$ represents H and a substituted or unsubstituted radical of: C1-C10 alkyl, C1-C10 alkoxy, C2-C10 alkenyl, or C6-C10 aryl;

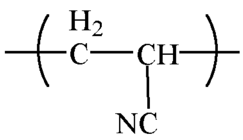

formula 1

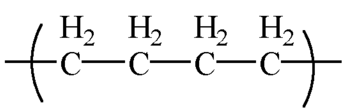

formula 2

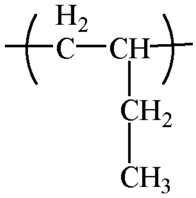

formula 3

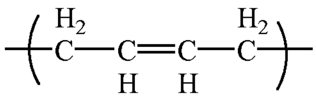

formula 4

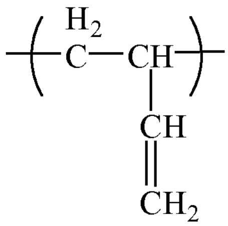

formula 5,

and

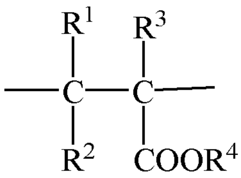

formula 6.

**In** the positive electrode plate based on the above solutions, there is an enhanced binding strength between the positive electrode film layer and the positive electrode current collector. Not theoretically limited, when the positive electrode active material slurry (comprising the solvent N-methylpyrrolidine, abbreviated as NMP) is coated on the surface of the conductive priming coat, the first polymer in the conductive priming coat will be re-dissolved after contact with the solvent NMP, thereby resulting in mutual diffusion between the priming coat and the positive electrode active material slurry, and after the priming coat is cured, the active material layer can be integrated with the priming coat, thereby effectively increasing the binding strength between the positive electrode film layer and the positive electrode current collector.

In some embodiments, the first polymer is a random copolymer.

Nitrile butadiene rubber (NBR) is a random copolymer formed by polymerization of acrylonitrile and a butadiene monomer (such as emulsion polymerization), and has a general structural formula of:

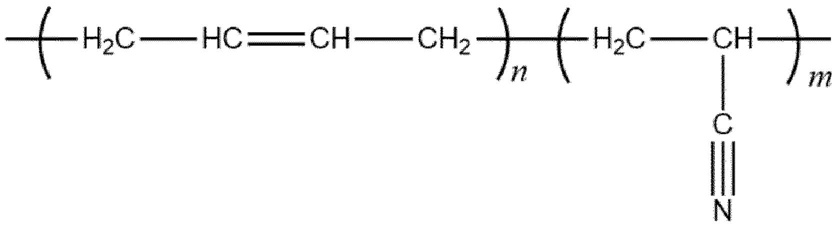

In the nitrile butadiene rubber, butadiene (B) and acrylonitrile (A) links are generally connected by triples of BAB, BBA or ABB, ABA and BBB, but may also be connected by a quintuple of AABAA with the increase of the acrylonitrile content, or even become bulk polymers of acrylonitrile. In the nitrile butadiene rubber, a sequence distribution of butadiene is mainly a trans-1,4-structure, and its microstructure is associated with polymerization conditions.

Hydrogenated nitrile butadiene rubber (HNBR) refers to a product of hydrogenation of carbon-carbon double bonds in the molecular chain of the nitrile butadiene rubber until the carbon-carbon double bonds are partially or completely saturated. The chemical formula of the fully saturated hydrogenated nitrile butadiene rubber is as follows:

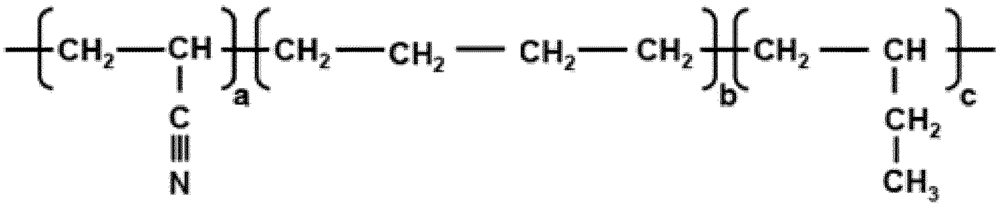

There are mainly three preparation methods for hydrogenated nitrile butadiene rubber (HNBR): ethylene-acrylonitrile copolymerization, NBR solution hydrogenation, and NBR emulsion hydrogenation.

Hydrogenated carboxyl nitrile butadiene rubber (HXNBR) is a polymer formed by copolymerization of a nitrile (such as acrylonitrile), a conjugated diene (such as butadiene), and an unsaturated carboxylate, followed by selective hydrogenation of C=C. The so-called hydrogenated carboxyl nitrile butadiene rubber is obtained by further introduction of a carboxyl into the hydrogenated nitrile butadiene rubber.

The unsaturated carboxylate is, for example, an unsaturated $\alpha,\beta$-monocarboxylate. An unsaturated $\alpha,\beta$-monocarboxylate that can be used is an alkyl ester and an alkoxyalkyl ester thereof, optionally an unsaturated alkyl $\alpha,\beta$-monocarboxylate, such as C1-C18 alkyl ester, optionally an alkyl acrylate or an alkyl methacrylate, such as C1-C18 alkyl ester, for example, methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylate, butyl methacrylate, and 2-ethylhexyl methacrylate, further optionally an unsaturated alkoxyalkyl $\alpha,\beta$-monocarboxylate, optionally an alkoxyalkyl acrylate or an alkoxyalkyl methacrylate, such as C2-C12-alkoxyalkyl acrylate or C2-C12-alkoxyalkyl methacrylate, and still further optionally methoxymethyl acrylate, methoxyethyl (meth)acrylate, ethoxyethyl (meth)acrylate, and methoxyethyl (meth)acrylate. A mixture of an alkyl ester (such as those mentioned above) and an alkoxyalkyl ester (such as those in the above forms) may also be used. Hydroxyalkyl acrylate and hydroxyalkyl methacrylate with the number of carbon atoms in the hydroxyalkyl therein being 1-12, optionally 2-hydroxyethyl acrylate, 2-hydroxyethyl methacrylate, and 3-hydroxypropyl acrylate, may also be used. Similarly, an epoxy-containing ester, such as glycidyl methacrylate, may also be used. Cyanoalkyl acrylate and cyanoalkyl methacrylate with the number of C atoms in the cyanoalkyl therein being 2-12, optionally $\alpha$-cyanoethyl acrylate, $\beta$-cyanoethyl acrylate, and cyanobutyl methacrylate, may also be used. Fluorobenzyl acrylate or fluorobenzyl methacrylate, optionally fluorobenzyl acrylate and fluorobenzyl methacrylate, may also be used. Fluoroalkyl acrylate and fluoroalkyl methacrylate, optionally trifluoroethyl acrylate and tetrafluoropropyl methacrylate, may also be used. An unsaturated amino-containing $\alpha,\beta$-carboxylate, such as dimethylaminomethyl acrylate and diethylaminoethyl acrylate, may also be used.

In some embodiments, the specific surface area of the positive electrode active material is 15-17 $m^2/g$, 17-19 $m^2/g$, 19-21 $m^2/g$, 21-23 $m^2/g$, or 23-25 $m^2/g$.

In some embodiments, the coating weight on one side of the positive electrode current collector is 20-25 $mg/cm^2$, 25-30 $mg/cm^2$, 30-35 $mg/cm^2$, or 35-40 $mg/cm^2$.

In some embodiments, based on the total mass of the first polymer,

a percentage mass content of the first monomer unit is M1, where M1 is 10%-55%, and is optionally 25%-55%; and/or
a percentage mass content of the second monomer unit is M2, where M2 is 40%-80%, and is optionally 50%-70%; and/or
a percentage mass content of the third monomer unit is M3, where M3 is 0%-10%, and is optionally 0.001%-2%; and/or
a percentage mass content of the fourth monomer unit is M4, where M4 is 0%-10%, and is optionally 0.1%-1%. The conductive priming coat based on this solution can be moderately dissolved during coating, and then form enhanced bonding to the positive electrode film layer.

In some embodiments, based on the total mass of the first polymer,

the percentage mass content of the first monomer unit is M1, where M1 is 10%-55%, and is optionally 10%-15%, 15%-20%, 20%-25%, 25%-30%, 30%-35%, 35%-40%, 40%-45%, 45%-50%, or 50%-55%; and/or
the percentage mass content of the second monomer unit is M2, where M2 is 40%-80%, and is optionally 40%-45%, 45%-50%, 50%-55%, 55%-60%, 60%-65%, 65%-70%, 70%-75%, or 75%-80%; and/or
the percentage mass content of the third monomer unit is M3, where M3 is 0%-10%, and is optionally 0.001%-1%, 1%-2%, 2%-3%, 3%-4%, 4%-5%, 5%-6%, 6%-7%, 7%-8%, 8%-9%, or 9%-10%; and/or
the percentage mass content of the fourth monomer unit is M4, where M4 is 0%-10%, and is optionally 0.01%-1%, 1%-2%, 2%-3%, 3%-4%, 4%-5%, 5%-6%, 6%-7%, 7%-8%, 8%-9%, or 9%-10%. The positive electrode plate based on this solution is used for the secondary battery, so that the binding strength between the active material and the current collector, the battery impedance performance, and/or the battery cycling performance are significantly

improved. The conductive priming coat based on this solution can be moderately dissolved during coating, and then form enhanced bonding to the positive electrode film layer.

In some embodiments, M3/(M2+M3) is 0%-5%, and is optionally 0.001%-1%. The positive electrode plate based on this solution is used for the secondary battery, so that the binding strength between the active material and the current collector, the battery impedance performance, and/or the battery cycling performance are significantly improved.

In some embodiments, M3/(M2+M3) is 0.01%-1%, 1%-2%, 2%-3%, 3%-4%, or 4%-5%.

In some embodiments, the first polymer comprises one or more selected from hydrogenated nitrile butadiene rubber or hydrogenated carboxyl nitrile butadiene rubber; and/or the weight average molecular weight of the first polymer is 50,000-1,500,000, and is optionally 200,000-400,000. The positive electrode plate based on this solution is used for the secondary battery, so that the binding strength between the active material and the current collector, the battery impedance performance, and/or the battery cycling performance are significantly improved.

In some embodiments, the weight average molecular weight of the first polymer is 100,000-300,000, 300,000-500,000, 500,000-700,000, 700,000-900,000, 900,000-1,100,000, 1,100,000-1,300,000, or 1,300,000-1,500,000.

In some embodiments, the first water-based binder comprises one or more selected from a water-based polyacrylic resin and a derivative thereof, a water-based amino-modified polypropylene resin and a derivative thereof, or a polyvinyl alcohol and a derivative thereof, and optionally comprises a copolymer selected from water-based acrylic acid-acrylate copolymers; and/or

the weight average molecular weight of the first water-based binder is 200,000-1,500,000, and is optionally 300,000-400,000. The positive electrode plate based on this solution is used for the secondary battery, so that the binding strength between the active material and the current collector, the battery impedance performance, and/or the battery cycling performance are significantly improved.

In some embodiments, the weight average molecular weight of the first water-based binder is 100,000-300,000, 300,000-500,000, 500,000-700,000, 700,000-900,000, 900,000-1,100,000, or 1,100,000-1,300,000.

In some embodiments, the first conductive agent includes one or more selected from superconducting carbon, conductive graphite, acetylene black, carbon black, Ketjen black, carbon dot, carbon nanotube, graphene, or carbon nanofiber, and optionally comprises one or more selected from carbon nanotube, graphene, or carbon nanofiber. The positive electrode plate based on this solution is used for the secondary battery, so that the binding strength between the active material and the current collector, the battery impedance performance, and/or the battery cycling performance are significantly improved.

In some embodiments, based on a total mass of the conductive priming coat,

a percentage mass content of the first polymer is X1, where X1 is 5%-20%, and is optionally 5%-10%; and/or
a percentage mass content of the first water-based binder is X2, where X2 is 30%-80%, and is optionally 40%-50%; and/or
a percentage mass content of the first conductive agent is X3, where X3 is 10%-50%, and is optionally 40%-50%.

In some embodiments, a thickness of the conductive priming coat is 1 μm-20 μm, and is optionally 3 μm-10 μm. The positive electrode plate based on this solution is used for the secondary battery, so that the binding strength between the active material and the current collector, the battery impedance performance, and/or the battery cycling performance are significantly improved.

In some embodiments, the positive electrode film layer further comprises one or more selected from an infiltrant or a dispersant, and optionally, the positive electrode film layer further comprises both an infiltrant and a dispersant. The positive electrode plate based on this solution is used for the secondary battery, so that the binding strength between the active material and the current collector, the battery impedance performance, and/or the battery cycling performance are significantly improved.

In some embodiments, the infiltrant has a surface tension of 20 mN/m-40 mN/m, and optionally, the infiltrant comprises at least one functional group among: -CN, $-NH_2$, -NH-, -N-, -OH, -COO-, and -C(=O)-O-C (=O)-. The positive electrode plate based on this solution is used for the secondary battery, so that the binding strength between the active material and the current collector, the battery impedance performance, and/or the battery cycling performance are significantly improved.

In some embodiments, the surface tension may be determined by Wilhelmy Plate Method. Specific test may be performed following the steps with reference to a general standard in the art, such as GBT/22237-2008 Surface active agents-Determination of surface tension or ASTM D1331-14, or a standard test method for surface tension and interfacial tension of coating solutions, solvents, surfactant solutions, and relevant materials.

In some embodiments, the infiltrant includes one or more selected from a small molecular organic solvent or a polymer of low molecular weight,

optionally, the small molecular organic solvent includes one or more selected from an alcohol amine, an alcohol, or a nitrile, and optionally, the number of carbon atoms of the alcohol amine is 1-16, and is optionally 2-6; and

Optionally, the polymer of low molecular weight comprises one or more selected from a maleic anhydride-styrene copolymer, polyvinylpyrrolidinone, or polysiloxane, and optionally, the weight average molecular weight of the polymer of low molecular weight is below 6,000 and is optionally 3,000-6,000. The positive electrode plate based on this solution is used for the secondary battery, so that the binding strength between the active material and the current collector, the battery impedance performance, and/or the battery cycling performance are significantly improved.

In some embodiments, the dispersant comprises a second polymer, and the second polymer comprises:

a fifth monomer unit represented by formula 7;
a sixth monomer unit that is at least one selected from the group consisting of a monomer unit represented by formula 8 and a monomer unit represented by formula 9; and
a seventh monomer unit that is at least one selected from the group consisting of a monomer unit represented by formula 10 and a monomer unit represented by formula 11;

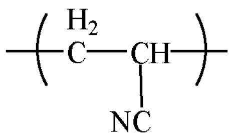

formula 7

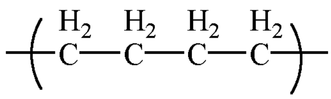

formula 8

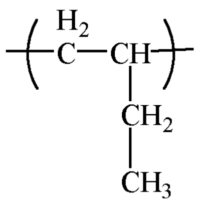

formula 9

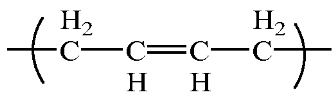

formula 10,

and

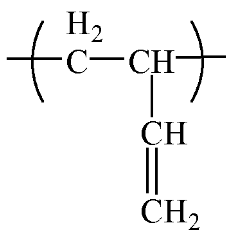

formula 11.

The positive electrode plate based on this solution is used for the secondary battery, so that the binding strength between the active material and the current collector, the battery impedance performance, and/or the battery cycling performance are significantly improved.

In some embodiments, based on the total mass of the second polymer,

a percentage mass content of the fifth monomer unit is M5, where M5 is 10%-55%, and is optionally 25%-55%; and/or
a percentage mass content of the sixth monomer unit is M6, where M6 is 40%-80%, and is optionally 40%-70%; and/or
a percentage mass content of the seventh monomer unit is M7, where M7 is 0%-10%, and is optionally 0.001%-2%.

In some embodiments, based on the total mass of the second polymer,

the percentage mass content of the fifth monomer unit is M5, where M5 is 10%-55%, and is optionally 10%-15%, 15%-20%, 20%-25%, 25%-30%, 30%-35%, 35%-40%, 40%-45%, 45%-50%, or 50%-55%; and/or
the percentage mass content of the sixth monomer unit is M6, where M6 is 40%-80%, and is optionally 40%-45%, 45%-50%, 50%-55%, 55%-60%, 60%-65%, 65%-70%, 70%-75%, or 75%-80%; and/or
the percentage mass content of the seventh monomer unit is M7, where M7 is 0%-10%, and is optionally 0.01%-1%, 1%-2%, 2%-3%, 3%-4%, 4%-5%, 5%-6%, 6%-7%, 7%-8%, 8%-9%, or 9%-10%.

In some embodiments, M7/(M6+M7) is 0%-5% and is optionally 0.001%-1%. The positive electrode plate based on this solution is used for the secondary battery, so that the binding strength between the active material and the current collector, the battery impedance performance, and/or the battery cycling performance are significantly improved.
In some embodiments, the second polymer is hydrogenated nitrile butadiene rubber; and/or the weight average molecular weight of the second polymer is 50,000 to 500,000, and is optionally 150,000-350,000. The positive electrode plate based on this solution is used for the secondary battery, so that the binding strength between the active material and the current collector, the battery impedance performance, and/or the battery cycling performance are significantly improved.
In some embodiments, based on a total mass of the positive electrode film layer,

a percentage mass content of the dispersant is Y1, where Y1 is 0.05%-1%, and is optionally 0.1%-0.5%; and/or
a percentage mass content of the infiltrant is Y2, where Y2 is 0.05%-2%, and is optionally 0.2%-0.8%. The positive electrode plate based on this solution is used for the secondary battery, so that the binding strength between the active material and the current collector, the battery impedance performance, and/or the battery cycling performance are significantly improved.

In some embodiments, Y1/Y2 is 0.05-20, is optionally 0.1-1, and is further 0.3-0.8.
In some embodiments, in the positive electrode plate, a mass ratio of the first polymer to the second polymer is 1.5-5, and is optionally 2-3. The positive electrode plate based on this solution is used for the secondary battery, so that the binding strength between the active material and the current collector, the battery impedance performance, and/or the battery cycling performance are significantly improved.
In some embodiments, the positive electrode active material comprises $Li_{1+x}Fe_{1-y}A_yP_{1-z}R_zO_4$,

$$-0.100 \leq x \leq 0.100;$$

$0 \leq y \leq 1$, optionally $0.001 \leq y \leq 0.500$;
$0 \leq z \leq 0.100$, optionally $0.001 \leq z \leq 0.100$;
the A is selected from one or more of Zn, Al, Na, K, Mg, Mo, W, Ti, V, Zr, Mn, Ni, Co, Ga, Sn, Sb, Nb, and Ge, and is optionally one or more of Mn, Ti, V, Ni, Co, and Mg, and
the R is selected from one or more of B, Si, N, and S. The positive electrode plate based on this solution is used for the secondary battery, so that the binding strength between the active material and the current collector, the battery impedance performance, and/or the battery cycling performance are significantly improved.

In some embodiments, a surface of the positive electrode active material is coated with carbon. The positive electrode plate based on this solution is used for the secondary battery, so that the binding strength between the active material and the current collector, the battery impedance performance, and/or the battery cycling performance are significantly improved.
In some embodiments, a volume particle size Dv50 of the positive electrode active material is 0.3 μm-1.5 μm. The positive electrode plate based on this solution is used for the secondary battery, so that the binding strength between the active material and the current collector, the battery impedance performance, and/or the battery cycling performance are significantly improved.
The second aspect of the present application provides a secondary battery, comprising the positive electrode plate in any one of the above embodiments.
The third aspect of the present application provides an electrical apparatus, comprising the above secondary battery.
The positive electrode plate generally comprises a positive electrode current collector and a positive electrode film layer arranged on at least one surface of the positive electrode current collector, and the positive electrode film layer comprises the positive electrode active material.
Fig. 1 shows a schematic diagram of a positive electrode plate according to an example. As shown in the figure, a positive electrode plate comprises a positive electrode current collector 11, a positive electrode film layer 13 arranged on at

least one surface 112 of the positive electrode current collector 11, and a conductive priming coat 12 arranged between the positive electrode current collector 11 and the positive electrode film layer 13.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector can comprise a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Here, examples of lithium transition metal oxides may include, but are not limited to, at least one of lithium-cobalt oxide (e.g., $LiCoO_2$), lithium-nickel oxide (e.g., $LiNiO_2$), lithium-manganese oxide (e.g., $LiMnO_2$, $LiMn_2O_4$), lithium-nickel-cobalt oxide, lithium-manganese-cobalt oxide, lithium-nickel-manganese oxide, lithium-nickel-cobalt-manganese oxide (e.g., $LiNi_{1/3}Co_{1/5}n_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium-nickel-cobalt-aluminum oxide (e.g., $LiNi_{0.85}Co_{0.15}Al_{0.05}O_2$), and a modified compounds thereof, etc. Examples of lithium-containing phosphates of olivine structure may include, but are not limited to, at least one of lithium iron phosphate (e.g., $LiFePO_4$ (also abbreviated as LFP)), lithium iron phosphate-carbon composite, lithium manganese phosphate (e.g., $LiMnPO_4$), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above ingredients, such as the positive electrode active material, the conductive agent, the binder, and any other ingredient, for preparing the positive electrode plate in a solvent (such as N-methyl pyrrolidone) to form a positive electrode slurry; and coating the positive electrode slurry on the positive electrode current collector, followed by procedures, such as oven drying and cold pressing, to provide the positive electrode plate.

[Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector can be a metal foil or a composite current collector. For example, a copper foil can be used as the metal foil. The composite current collector may comprise a high molecular material substrate layer and a metal layer formed on at least one surface of the high molecular material substrate. The composite current collector may be formed by forming a metal material (such as copper, copper alloy, nickel, nickel alloy, titanium, titanium alloy, silver, and silver alloy) on the high molecular material substrate (such as a substrate of polypropylene (PP), polyethylene terephthalate (PET), polybutylene terephthalate (PBT), polystyrene (PS), or polyethylene (PE)).

In some embodiments, a negative electrode active material for a battery well known in the art may be used as the negative electrode active material. As an example, the negative electrode active material may include at least one of the

following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared by: dispersing the above ingredients, such as the negative electrode active material, the conductive agent, the binder, and any other ingredient, for preparing the negative electrode plate in a solvent (such as deionized water) to form a negative electrode slurry; and coating the negative electrode slurry on the negative electrode current collector, followed by procedures, such as oven drying and cold pressing, to provide the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gel state, or an all-solid state.

In some embodiments, the electrolyte is in a liquid state, and comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution further optionally comprises an additive. As an example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

[Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator may be selected from at least one of glass fiber, non-woven cloth, polyethylene, polypropylene, and polyvinylidene fluoride. The separator may be a single-layer film or a multilayer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and the examples of the plastic may include

polypropylene, polybutylene terephthalate, polybutylene succinate, and the like.

The shape of the secondary battery is not particularly limited in the present application, and may be a cylinder shape, a square shape, or any other shape. For example, Fig. 3 shows a secondary battery 5 with a square structure as an example.

In some embodiments, referring to Fig. 4, the outer package may include a case 51 and a cover plate 53. Here, the case 51 may comprise a bottom plate and a side plate connected to the bottom plate, where the bottom plate and the side plate enclose to form an accommodating cavity. The case 51 has an opening that communicates with the accommodating cavity, and the cover plate 53 can cover the opening to close the accommodating cavity. The positive electrode plate, the negative electrode plate, and the separator may form an electrode assembly 52 by a winding process or a stacking process. The electrode assembly 52 is encapsulated within the accommodating cavity. The electrolyte solution infiltrates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art based on the application and capacity of the battery module.

Fig. 5 shows a battery module 4 as an example. Referring to Fig. 5, in the battery module 4, a plurality of secondary batteries 5 can be sequentially arranged along a length direction of the battery module 4. Of course, any other arrangement is also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

Fig. 6 and Fig. 7 show a battery pack 1 as an example. Referring to Fig. 6 and Fig. 7, the battery pack 1 may comprise a battery box and a plurality of battery modules 4 arranged in the battery box. The battery box comprises an upper box body 2 and a lower box body 3, where the upper box body 2 can cover the lower box body 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, or an energy storage system.

For the electrical apparatus, the secondary battery, the battery module, or the battery pack may be selected according to use requirements thereof.

Fig. 8 is an electrical apparatus as an example. The electrical apparatus is, e.g., an all-electric vehicle, a hybrid electric vehicle, or a plug-in hybrid electric vehicle. In order to meet the requirements of the electrical apparatus for high power and high energy density of a secondary battery, a battery pack or a battery module may be used.

Examples of the present application will be described below. The examples described below are illustrative, are merely used to explain the present application, and should not be construed as limiting the present application. Where no specific techniques or conditions are specified in the examples, the techniques or conditions described in literatures of the art or the product specifications are prevailing. Where no manufacturers are specified, the reagents or instruments used are conventional products and are commercially available.

Example 1 (positive electrode active material in Example 1)

1. Provision of a first polymer

In the following examples, the first polymer is a hydrogenated carboxyl nitrile butadiene rubber comprising a first monomer unit, a second monomer unit, a third monomer unit, and a fourth monomer unit. Weight percentages of the first monomer unit, the second monomer unit, the third monomer unit, and the fourth monomer unit in the polymer are as shown in Table 1a.

The first monomer unit is a monomer unit represented by formula 1;

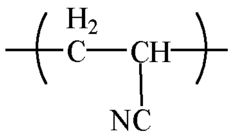

formula 1

the second monomer unit is at least one selected from the group consisting of a monomer unit represented by formula 2 and a monomer unit represented by formula 3;

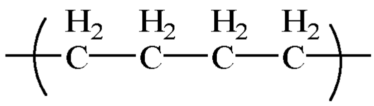

formula 2

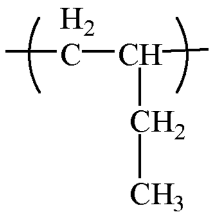

formula 3

the third monomer unit is at least one selected from the group consisting of a monomer unit represented by formula 4 and a monomer unit represented by formula 5;

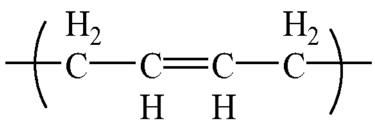

formula 4

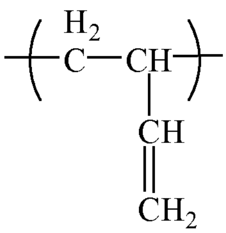

formula 5 and

the fourth monomer unit is a monomer unit represented by formula 6:

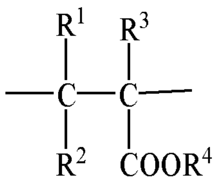

formula 6

In this example, $R^1$, $R^2$, and $R^3$ are each H, and $R^4$ is n-butyl.

Table 1a

| First monomer unit Weight percentage M1 | Second monomer unit Weight percentage M2 | Third monomer unit Weight percentage M3 | Fourth monomer unit Weight percentage M4 | Weight average molecular weight /10,000 |
|---|---|---|---|---|
| 34% | 64% | 1% | 1% | 25 |

2. Preparation of an aluminum foil having a conductive priming coat

The first polymer, the first water-based binder (polyacrylic acid-acrylate copolymer with the weight average molecular weight of 340,000), and the first conductive agent (SP) at a weight ratio of 15:40:45 were dissolved/dispersed in deionized water, to make a conductive priming coat slurry.

The conductive priming coat slurry was coated on both sides of the aluminum foil, and dried to form the conductive priming coat with a thickness of 5 $\mu$m on each side, and then provide the aluminum foil having the conductive priming coat.

3) Preparation of a positive electrode plate

The positive electrode active material ($LiFePO_4$ with a specific surface area (BET) of 17.55 $m^2/g$), a conductive agent acetylene black, and a binder polyvinylidene fluoride (PVDF) at a weight ratio of 92:2.5:5.5 were sufficiently mixed in a solvent system of N-methyl pyrrolidone to obtain a positive electrode slurry. The positive electrode slurry was coated on both sides of the aluminum foil having the conductive priming coat, oven dried, and cold pressed to form a positive electrode film layer, and then provide the positive electrode plate. A surface density on one side of the positive electrode film layer is 0.025 $g/m^2$, and a compacted density of the positive electrode film layer is 2.4 $g/m^3$.

4) Preparation of a negative electrode plate

A negative electrode active material artificial graphite, hard carbon, the conductive agent acetylene black, a binder styrene butadiene rubber (SBR), and a thickener sodium carboxymethyl cellulose (CMC) at a weight ratio of 90:5:2:2:1 were sufficiently mixed in deionized water. Then, the mixture was coated on a copper foil, oven dried, and cold pressed, to form a negative electrode film layer, and then provide the negative electrode plate. A surface density on one side of the negative electrode film layer is 0.013 $g/m^2$, and a compacted density of the negative electrode film layer is 1.7 $g/m^3$.

5) Assembly of a full battery

The positive electrode plate, a separator (a porous polymer film of polyethylene (PE)), and the negative electrode plate were sequentially stacked, such that the separator was located between the positive electrode and the negative electrode to serve for separation, and the resulting assembly was winded to obtain a bare battery cell. The bare battery cell was placed in an outer package, into which an electrolyte solution was injected, and which was encapsulated, to provide the full battery.

In a single full battery, the weight of the positive electrode active material is 565.66 g; and the weight of the negative electrode active material is 309.38 g.

Examples 2-5

Examples 2-5 are different from Example 1 in step 3). Other step parameters are same as those in Example 1. The positive electrode active materials in step 3) of Examples 1-5 are as shown in Table 1b below:

Table 1b

| | Chemical formula | Specific surface area (BET) |
|---|---|---|
| Example 1 | $LiFePO_4$ | 17.55 $m^2/g$ |
| Example 2 | $LiFe_{0.8}V_{0.2}PO_4$ | 17.50 $m^2/g$ |
| Example 3 | $LiFe_{0.8}V_{0.2}P_{0.97}S_{0.03}O_4$ | 17.54 $m^2/g$ |
| Example 4 | $Li_{1.1}Fe_{0.8}V_{0.2}P_{0.97}S_{0.03}O_4$ | 17.55 $m^2/g$ |
| Example 5 | $Li_{1.1}Fe_{0.8}Sn_{0.2}P_{0.97}S_{0.03}O_4$ | 17.52 $m^2/g$ |

Example 5X (the first polymer was replaced with an I-th polymer)

Example 5X is different from Example 1 in step 2). Other step parameters are same as those in Example 1.

In step 2) of Example 5X, the I-th polymer, the first water-based binder (polyacrylic acid-acrylate copolymer), and the first conductive agent (SP) at a weight ratio of 15:40:45 were dissolved/dispersed in deionized water, to make a conductive priming coat slurry. The conductive priming coat slurry was coated on the aluminum foil, and dried to form the conductive priming coat with a thickness of 5 $\mu$m, and then provide the aluminum foil having the conductive priming coat.

The I-th polymer is different from the first polymer in that the polymer compositions are different, and the composition of the I-th polymer is as shown in Table 2 below.

Table 2

| M1 | M2 | M3 | M4 | Weight average molecular weight/10,000 |
|---|---|---|---|---|
| 30% | 59% | 10% | 1% | 25 |
| *The weight percentage of the first monomer unit is M1; the weight percentage of the second monomer unit is M2; the weight percentage of the third monomer unit is M3; and the weight percentage of the fourth monomer unit is M4. | | | | |

Comparative Example 1 (without arrangement of a conductive priming coat)

Comparative Example 1 is different from Example 1 in steps 2) and 3). Other step parameters are same as those in Example 1.

In steps 2) and 3) of Comparative Example 1, the aluminum foil having the conductive priming coat was not prepared. Instead, the positive electrode slurry was directly coated on the aluminum foil, oven dried, and cold pressed to form the positive electrode film layer, and then provide the positive electrode plate.

The positive electrode active material used in step 3) of Comparative Example 1 is the positive electrode active material in the above Example 1.

Comparative Example 2 (free of the first polymer)

Comparative Example 2 is different from Example 1 in step 2). Other step parameters are same as those in Example 1.

In step 2) of Comparative Example 2, the first water-based binder (polyacrylic acid-acrylate copolymer) and the first conductive agent (SP) at a weight ratio of 40:45 were dissolved/dispersed in deionized water, to make a conductive priming coat slurry. The conductive priming coat slurry was coated on the aluminum foil, and dried to form the conductive priming coat with a thickness of 5 μm, and then provide the aluminum foil having the conductive priming coat.

Comparison Example 3 (the first water-based binder was replaced with the I-th binder)

Comparative Example 3 is different from Example 1 in step 2). Other step parameters are same as those in Example 1.

In step 2) of Comparative Example 3, the first polymer, the I-th binder (polyacrylic acid with the weight average molecular weight of 350,000), and the first conductive agent (SP) at a weight ratio of 15:40:45 were dissolved/dispersed in deionized water, to make a conductive priming coat slurry. The conductive priming coat slurry was coated on the aluminum foil, and dried to form the conductive priming coat with a thickness of 5 μm, and then provide the aluminum foil having the conductive priming coat.

Analysis and detection

1. Bonding force test of the positive electrode plate

Figs. 2(a)-(d) show flow charts of a peeling test. As shown in Fig. 2(a), a steel plate 510 with a size of width 30 mm×length 100 mm was first provided. As shown in Fig. 2(b), a double-sided tape 520 was then provided. The double-sided tape 520 has a size of width 20 mm×length 30mm. The double-sided tape 520 was binded to the steel plate 510, with a wide side of the double-sided tape 520 aligned to a wide side of the steel plate 510. As shown in Fig. 2(c), a to-be-tested electrode plate 530 was then provided. The to-be-tested electrode plate 530 has a size of width 20 mm×length 180 mm. The to-be-tested electrode plate 530 covered on the double-sided tape 520 (with two sides aligned), with a coated surface of the electrode plate 530 facing the double-sided tape 520. Since the length of the to-be-tested electrode plate 530 was greater than the length of the double-sided tape 520, a partial region of the to-be-tested electrode plate 520 was not bonded to the double-sided tape. As shown in Fig. 2(d), the steel plate 510 was fixed to a base of a tensile tester, one end of the to-be-tested electrode plate 530 that was not bonded to the double-sided tape was clamped with a clamp, then the clamp was pulled towards a direction of the other end (as shown by the arrow), and the tensile force direction was perpendicular to the steel plate 510 at a certain distance from the surface of the steel plate 510. While the electrode plate was pulled towards outside of paper to be peeled off, the steel plate moved upward to keep the pulling direction perpendicular to the peeling position of the electrode plate. During pulling, the electrode plate 530 was pulled to be gradually peeled off from the steel

plate. During pulling, the clamp was pulled at a speed of 50 mm/min. During pulling, the pulling force of the clamp was recorded, and after the pulling force was constant, the electrode plate was further peeled off by an additional length of 40 mm, where the average pulling force at the peeling length was the bonding force (unit: N).

2. directive current resistance value test of the battery

At 25°C, the battery was charged to 4.3V at a constant current of 1.0C (1.0C refers to nominal capacity); adjusted to a battery level of 50% SOC at a rate of 1.0C, left to stand for 5 min, and then discharged at a constant current ($I_m$) of 4C for 30 s (voltage data was collected once every 1 s), where the initial voltage $U_0$ and the voltage $U_{30}$ after discharge for 30 s were recorded, and the directive current resistance (DCR) value was computed as the following formula.

$$\text{directive current resistance value} = (U_0 - U_{30})/I_m$$

The directive current resistance value of the battery in Example 1 was taken as 100%, and changes in other examples and comparative examples relative to Example 1 were reflected in the form of percentages.

3. The number of cycles at 80% of 45°C capacity retention rate of the battery (hereinafter abbreviated as the "number of cycles at 80% capacity")

In an environment at a constant temperature of 45°C, the full battery was charged to 4.3V at a rate of 1C at 2.5-4.3V, then charged to a current of less than or equal to 0.05 mA at a constant voltage of 4.3V, left to stand for 5 min, and then discharged to 2.5V at 1C with the discharging capacity at this time denoted as D0. The above charge-discharge cycles were repeated, until the discharge capacity decreased to 80% of D0. The number of cycles of the battery at this time was recorded.

According to the above detection and analysis methods, the bonding force of the positive electrode plate prepared in the above Examples 1-5 and Comparative Examples 1-4, the directive current resistance value of the battery, and the number of cycles at 80% of 45°C capacity retention rate of the battery was detected. The results are as shown in Table 3 below.

Table 3

| | Bonding force of positive electrode plate/N | directive current resistance Based on Example 1 | Number of cycles at 80% capacity |
|---|---|---|---|
| Comparative Example 1 | 4.5 | 210% | 350 |
| Comparative Example 2 | 9.8 | 125% | 3011 |
| Comparative Example 3 | 14.5 | 110% | 3306 |
| Example 1 | 13.2 | 100% | 3544 |
| Example 2 | 15.2 | 98% | 3550 |
| Example 3 | 14.2 | 95% | 3700 |
| Example 4 | 13.9 | 97% | 3500 |
| Example 5 | 14.0 | 99% | 3100 |
| Example 5X | 13.7 | 233% | 407 |

As can be seen from Table 3, the positive electrode plate in Examples 1-5 and Example 5X shows increased bonding force, and the battery in Examples 1-5 shows decreased directive current resistance and increased cycling capacity retention rate.

The above improvement effects were not achieved in Comparative Example 1 (without arrangement of the conductive priming coat), Comparative Example 2 (free of the first polymer), and Comparative Example 3 (the first water-based binder was replaced with the I-th binder).

Examples 6 to 12 (the composition of the first polymer was changed)

Examples 6 to 12 are different from Example 1 in step 2). Other step parameters are same as those in Example 1.

In step 2), the composition of the first polymer used in Examples 6 to 12 is different from the composition of the first polymer used in Example 1 specifically in that the weight percentages of the second monomer unit and the third monomer units are different from those in Example 1. The composition of the first polymer in Examples 6 to 12 is as shown in Table 4

below.

Table 4

| | M1 | M2 | M3 | M4 | M3/(M2+M3) |
|---|---|---|---|---|---|
| Example 1 | 34% | 64.0% | 1% | 1% | 1.54% |
| Example 6 | 34% | 65.0% | 0 | 1% | 0 |
| Example 7 | 34% | 64.9675% | 0.0325% | 1% | 0.05% |
| Example 8 | 34% | 64.935% | 0.065% | 1% | 0.10% |
| Example 9 | 34% | 64.87% | 0.13% | 1% | 0.20% |
| Example 10 | 34% | 64.805% | 0.195% | 1% | 0.30% |
| Example 11 | 34% | 64.675% | 0.325% | 1% | 0.50% |
| Example 12 | 34% | 59.8% | 5.2% | 1% | 8.0% |
| *The weight percentage of the first monomer unit is M1; the weight percentage of the second monomer unit is M2; the weight percentage of the third monomer unit is M3; and the weight percentage of the fourth monomer unit is M4. | | | | | |

Examples 13 to 17 (the thickness of the conductive priming coat was changed)

Examples 13 to 17 are different from Example 1 in step 2). Other step parameters are same as those in Example 1.

In step 2), the thickness of the conductive priming coat in Examples 13 to 17 is different from the thickness of the conductive priming coat in Example 1, details as per Table 5.

Table 5

| | Example 1 | Example 13 | Example 14 | Example 15 | Example 16 | Example 17 |
|---|---|---|---|---|---|---|
| Thickness of conductive priming coat | 5 μm | 1 μm | 3 μm | 7 μm | 10 μm | 20 μm |

Examples 18 to 23 (the composition of the conductive priming coat was changed)

Examples 18 to 23 are different from Example 1 in step 2). Other step parameters are same as those in Example 1.

In step 2), the composition of the conductive priming coat (ratio of the first polymer, the first water-based binder, and the first conductive agent) in Examples 18 to 23 is different from the composition of the conductive priming coat in Example 1, details as per Table 6.

Table 6

| | First polymer Parts by weight (%) | First water-based binder Parts by weight (%) | First conductive agent Parts by weight (%) |
|---|---|---|---|
| Example 1 | 15 | 40 | 45 |
| Example 18 | 5 | 45 | 50 |
| Example 19 | 10 | 40 | 50 |
| Example 20 | 20 | 30 | 50 |
| Example 21 | 10 | 80 | 10 |
| Example 22 | 10 | 65 | 25 |
| Example 23 | 10 | 50 | 40 |

According to the above detection and analysis methods, the bonding force of the positive electrode plate prepared in the above Example 1 and Examples 6 to 23, the directive current resistance value of the battery, and the number of cycles at 80% of 45°C capacity retention rate of the battery was detected. The results are as shown in Table 7

below.

Table 7

| | Bonding force of electrode plate | directive current resistance | Number of cycles at 80% capacity |
|---|---|---|---|
| Example 1 | 13.2 | 100% | 3544 |
| Example 6 | 12.7 | 100% | 3600 |
| Example 7 | 13 | 97% | 3690 |
| Example 8 | 12.5 | 100% | 3452 |
| Example 9 | 13.1 | 99% | 3671 |
| Example 10 | 13.8 | 98% | 3533 |
| Example 11 | 13.9 | 99% | 3600 |
| Example 12 | 12 | 248% | 3552 |
| Example 13 | 9.5 | 110% | 3340 |
| Example 14 | 8.3 | 101% | 3520 |
| Example 15 | 10.9 | 100% | 3579 |
| Example 16 | 22.3 | 120% | 3600 |
| Example 17 | 32.7 | 150% | 3478 |
| Example 18 | 9.1 | 100% | 3630 |
| Example 19 | 10.8 | 105% | 3580 |
| Example 20 | 11.5 | 103% | 3601 |
| Example 21 | 11.7 | 145% | 3500 |
| Example 22 | 14.7 | 130% | 3535 |
| Example 23 | 15.3 | 110% | 3530 |

As can be seen from Table 7, the positive electrode plate in Examples 6 to 23 shows increased bonding force, and the battery in Examples 6 to 23 shows decreased directive current resistance and increased cycling capacity retention rate. When the value of M3/(M2+M3) is 0-5%, the battery shows significantly decreased directive current resistance

Examples 24-32

Examples 24-32 are different from Example 1 in step 3). Other step parameters are same as those in Example 1.

In step 3) of Examples 24 to 32, the positive electrode active material ($LiFePO_4$ with a specific surface area (BET) of 17.55 m2/g) in the above Example 1, the conductive agent acetylene black, the binder polyvinylidene fluoride (PVDF), a dispersant, and an infiltrant at a weight ratio of $(92-Y_1-Y_2)$:2.5:5.5:$Y_1$:$Y_2$ were sufficiently mixed in a solvent system of N-methyl pyrrolidone to obtain a positive electrode slurry. The positive electrode slurry was coated on both sides of the aluminum foil having the conductive priming coat, oven dried, and cold pressed to form a positive electrode film layer, and then provide the positive electrode plate. A surface density on one side of the positive electrode film layer is 0.025 g/$m^2$, and a compacted density of the positive electrode film layer is 2.4 g/$m^3$.

The infiltrant in Examples 24-32 is a maleic anhydride-styrene copolymer (molecular weight: 5,000). The dispersant in Examples 24-32 is the second polymer.

The second polymer was purchased from ARLANXEO. The second polymer is a hydrogenated nitrile butadiene rubber comprising a fifth monomer unit, a sixth monomer unit, and a seventh monomer unit. Weight percentages of the fifth monomer unit, the sixth monomer unit, and the seventh monomer unit in the polymer and the weight average molecular weight of the first polymer are as shown in Table 8.

The fifth monomer unit is a monomer unit represented by formula 1;

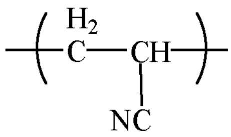

formula 7

the sixth monomer unit is at least one selected from the group consisting of the monomer unit represented by formula 8 and the monomer unit represented by formula 9; and

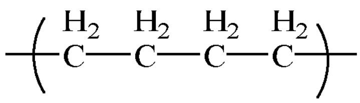

formula 8

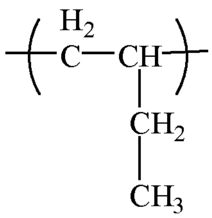

formula 9

the seventh monomer unit is at least one selected from the group consisting of a monomer unit represented by formula 10 and a monomer unit represented by formula 11;

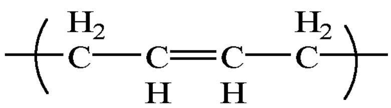

formula 10 and

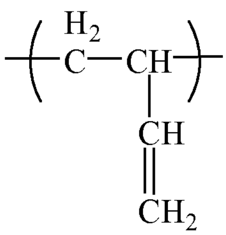

formula 11

Table 8

| M5 | M6 | M7 | Weight average molecular weight/10,000 |
|---|---|---|---|
| 45% | 54.9% | 0.1% | 22 |
| *The weight percentage of the fifth monomer unit is M5; the weight percentage of the sixth monomer unit is M6; and the weight percentage of the seventh monomer unit is M7. | | | |

In the positive electrode plate of Examples 24-32, a mass ratio of the first polymer (from the conductive priming coat) to the second polymer (from the positive electrode film layer) is 2:1.

In step 3) of Examples 24-32, a proportion $Y_1$ of the dispersant (the second polymer), a proportion $Y_2$ of the infiltrant (maleic anhydride-styrene copolymer, and a ratio of $Y_1/Y_2$ are as shown in Table 9 below.

Table 9

| | $Y_1$ (%) | $Y_2$ (%) | $Y_1/Y_2$ |
|---|---|---|---|
| Example 24 | 0.2 | 0.3 | 0.67 |
| Example 25 | 0.1 | 0.5 | 0.20 |

(continued)

| | $Y_1$ (%) | $Y_2$ (%) | $Y_1/Y_2$ |
|---|---|---|---|
| Example 26 | 0.5 | 0.5 | 1.00 |
| Example 28 | 0.25 | 0.05 | 5.00 |
| Example 29 | 0.25 | 0.2 | 1.25 |
| Example 30 | 0.25 | 0.3 | 0.83 |
| Example 31 | 0.25 | 0.8 | 0.31 |
| Example 32 | 0.25 | 2 | 0.13 |

According to the above detection and analysis methods, the bonding force of the positive electrode plate prepared in the above Examples 1 and 24-32, the directive current resistance value of the battery, and the number of cycles at 80% of 45°C capacity retention rate of the battery was detected. The results are as shown in Table 10 below.

Table 10

| | Bonding force of electrode plate | directive current resistance | Number of cycles |
|---|---|---|---|
| Example 1 | 13.2 | 100% | 3544 |
| Example 24 | 58 | 93% | 3562 |
| Example 25 | 66 | 95% | 3470 |
| Example 26 | 178 | 103% | 3610 |
| Example 28 | 106 | 100% | 3600 |
| Example 29 | 105 | 99% | 3830 |
| Example 30 | 110 | 98% | 3481 |
| Example 31 | 108 | 106% | 3590 |
| Example 32 | 111 | 116% | 3110 |

As shown in Table 10, the novel positive electrode film layer comprising the dispersant and the infiltrant and combining with the above novel conductive priming coat can further improve the bonding force of the electrode plate, reduce the directive current resistance of the battery, and improve the cycling performance of the battery.

Examples A1-A3, B1-B4, C1-C4, and D1-D4

Examples A1-A3, B1-B4, C1-C4, and D1-D4 are different from Example 1 in step 2). Other step parameters are same as those in Example 1.

In step 2), the composition of the first polymer used in Examples A1-A3, B1-B4, C1-C4, and D1-D4 is different from the composition of the first polymer used in Example 1 in that the percentage contents of M1, M2, M3, and M4 are different, details as follows:

Table 11

| | M1 | M2 | M3 | M4 | M3/ (M2+M3) | Electrode plate Bonding force | DC impedance | Cycles Number |
|---|---|---|---|---|---|---|---|---|
| A1 | 10% | 88% | 1% | 1% | 1.12% | 5.5 | 122% | 642 |
| A2 | 25% | 73% | 1% | 1% | 1.35% | 12.2 | 105% | 3549 |
| A3 | 55% | 43% | 1% | 1% | 2.27% | 13.1 | 100% | 3762 |
| B1 | 58% | 40% | 1% | 1% | 2.44% | 6.00 | 134% | 1500 |
| B2 | 48% | 50% | 1% | 1% | 1.96% | 13.2 | 101% | 3460 |
| B3 | 28% | 70% | 1% | 1% | 1.41% | 13.1 | 95% | 3677 |

(continued)

| | M1 | M2 | M3 | M4 | M3/ (M2+M3) | Electrode plate Bonding force | DC impedance | Cycles Number |
|---|---|---|---|---|---|---|---|---|
| B4 | 18% | 80% | 1% | 1% | 1.23% | 7.20 | 210% | 1780 |
| C1 | 34% | 65.00% | 0 | 1% | 0 | 12.7 | 100% | 3600 |
| C2 | 34% | 64.99% | 0.001% | 1% | 0.0015% | 13.2 | 101% | 3460 |
| C3 | 34% | 63.00% | 2.0% | 1% | 3.08% | 13.1 | 95% | 3677 |
| C4 | 34% | 55.00% | 10% | 1% | 15.38% | 7.00 | 164% | 1987 |
| D1 | 34% | 65.00% | 1% | 0 | 1.52% | 3.60 | 107% | 2860 |
| D2 | 34% | 64.90% | 1% | 0.10% | 1.54% | 14.00 | 104% | 3500 |
| D3 | 34% | 64.00% | 1% | 1% | 1.54% | 13.2 | 100% | 3544 |
| D4 | 34% | 55.00% | 1% | 10% | 1.78% | 6.90 | 119% | 2030 |
| *The weight percentage of the first monomer unit is M1; the weight percentage of the second monomer unit is M2; the weight percentage of the third monomer unit is M3; and the weight percentage of the fourth monomer unit is M4. | | | | | | | | |

In Examples A1-A3, the percentage mass content of the first monomer unit is 10%-55%, and the positive electrode plate based on this solution is used for the secondary battery, so that the binding strength between the active material and the current collector, the battery impedance performance, and/or the battery cycling performance are improved. In Examples A2-A3, the percentage mass content of the first monomer unit is 25%-55%, and the binding strength between the active material and the current collector, the battery impedance performance, and/or the battery cycling performance are further improved.

In Examples B1-B4, the percentage mass content of the second monomer unit is 40%-80%, and the positive electrode plate based on this solution is used for the secondary battery, so that the binding strength between the active material and the current collector, the battery impedance performance, and/or the battery cycling performance are improved. In Examples B2-B3, the percentage mass content of the second monomer unit is 50%-70%, and the binding strength between the active material and the current collector, the battery impedance performance, and/or the battery cycling performance are further improved.

In Examples C1-A4, the percentage mass content of the third monomer unit is 0%-10%, and the positive electrode plate based on this solution is used for the secondary battery, so that the binding strength between the active material and the current collector, the battery impedance performance, and/or the battery cycling performance are improved. In Examples C2-C3, the percentage mass content of the third monomer unit is 0.001%-2%, and the binding strength between the active material and the current collector, the battery impedance performance, and/or the battery cycling performance are further improved.

In Examples D1-D4, the percentage mass content of the fourth monomer unit is 0%-10%, and the positive electrode plate based on this solution is used for the secondary battery, so that the binding strength between the active material and the current collector, the battery impedance performance, and/or the battery cycling performance are improved. In Examples D2-D3, the percentage mass content of the fourth monomer unit is 0.1%-1%, and the binding strength between the active material and the current collector, the battery impedance performance, and/or the battery cycling performance are further improved.

As can be seen from the above experimental data, the present application successfully provides a novel positive electrode plate, a secondary battery, and an electrical apparatus. The positive electrode plate comprises a novel conductive priming coat, which achieves better effects in one or even all aspects of providing a bonding force of the electrode plate, reducing the directive current resistance of the battery, and improving the cycling performance of the battery.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

**1.** A positive electrode plate, comprising a positive electrode current collector, a positive electrode film layer arranged on at least one surface of the positive electrode current collector, and a conductive priming coat arranged between the positive electrode current collector and the positive electrode film layer, wherein

the positive electrode film layer comprises a positive electrode active material, a specific surface area of the positive electrode active material is 15 $m^2/g$-25 $m^2/g$, and a coating weight on one side of the positive electrode current collector is 20 $mg/cm^2$-40 $mg/cm^2$;
the conductive priming coat comprises a first polymer, a first water-based binder, and a first conductive agent, and the first polymer comprises:

a first monomer unit represented by formula 1;
a second monomer unit that is at least one selected from the group consisting of a monomer unit represented by formula 2 and a monomer unit represented by formula 3;
a third monomer unit that is at least one selected from the group consisting of a monomer unit represented by formula 4 and a monomer unit represented by formula 5; and
a fourth monomer unit represented by formula 6, wherein $R^1$, $R^2$, and $R^3$ each independently represent H, carboxyl, an ester group, and a substituted or unsubstituted radical of C1-C10 alkyl, C1-C10 alkoxy, C2-C10 alkenyl, or C6-C10 aryl, and $R^4$ represents H and a substituted or unsubstituted radical of: C1-C10 alkyl, C1-C10 alkoxy, C2-C10 alkenyl, or C6-C10 aryl;

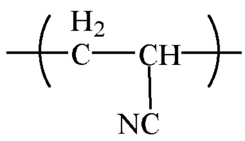
formula 1

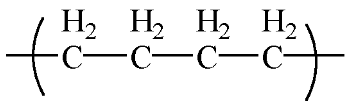
formula 2

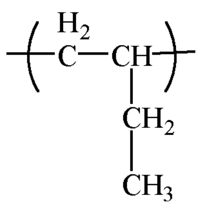
formula 3

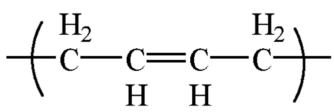
formula 4

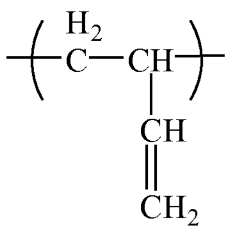
formula 5,

and

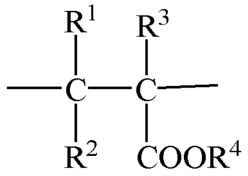

formula 6.

**2.** The positive electrode plate according to claim 1, wherein, based on the total mass of the first polymer,

a percentage mass content of the first monomer unit is M1, wherein M1 is 10%-55%, and is optionally 25%-55%; and/or
a percentage mass content of the second monomer unit is M2, wherein M2 is 40%-80%, and is optionally 50%-70%; and/or
a percentage mass content of the third monomer unit is M3, wherein M3 is 0%-10%, and is optionally 0.001%-2%; and/or
a percentage mass content of the fourth monomer unit is M4, wherein M4 is 0%-10%, and is optionally 0.1%-1%.

**3.** The positive electrode plate according to claim 2, wherein M3/(M2+M3) is 0%-5%, optionally 0.001%-1%.

**4.** The positive electrode plate according to any one of claims 1-3, wherein

the first polymer comprises one or more selected from hydrogenated nitrile butadiene rubber or hydrogenated carboxyl nitrile butadiene rubber; and/or
the weight average molecular weight of the first polymer is 50,000-1,500,000, optionally 200,000-400,000.

**5.** The positive electrode plate according to any one of claims 1-4, wherein

the first water-based binder comprises one or more selected from a water-based polyacrylic resin and a derivative thereof, a water-based amino-modified polypropylene resin and a derivative thereof, or a polyvinyl alcohol and a derivative thereof, and optionally comprises a copolymer selected from water-based acrylic acid-acrylate copolymers; and/or
the weight average molecular weight of the first water-based binder is 200,000-1,500,000, optionally 300,000-400,000.

**6.** The positive electrode plate according to any one of claims 1-5, wherein the first conductive agent includes one or more selected from superconducting carbon, conductive graphite, acetylene black, carbon black, Ketjen black, carbon dot, carbon nanotube, graphene, or carbon nanofiber, and optionally comprises one or more selected from carbon nanotube, graphene, or carbon nanofiber.

**7.** The positive electrode plate according to any one of claims 1-6, wherein, based on a total mass of the conductive priming coat,

a percentage mass content of the first polymer is X1, wherein X1 is 5%-20%, optionally 5%-10%; and/or
a percentage mass content of the first water-based binder is X2, wherein X2 is 30%-80%, and 40%-50%; and/or
a percentage mass content of the first conductive agent is X3, wherein X3 is 10%-50%, and 40%-50%.

**8.** The positive electrode plate according to any one of claims 1-7, wherein a thickness of the conductive priming coat is 1 $\mu$m-20 $\mu$m, optionally 3 $\mu$m-10 $\mu$m.

**9.** The positive electrode plate according to any one of claims 1-8, wherein the positive electrode film layer further comprises one or more selected from an infiltrant or a dispersant, and optionally, the positive electrode film layer further comprises both an infiltrant and a dispersant.

**10.** The positive electrode plate according to claim 9, wherein the infiltrant has a surface tension of 20 mN/m-40 mN/m, and optionally, the infiltrant comprises at least one functional group among: -CN, $-NH_2$, -NH-, -N-, -OH, - COO-, and -C(=O)-O-C (=O)-.

**11.** The positive electrode plate according to claim 9 or 10, wherein

the infiltrant includes one or more selected from a small molecular organic solvent or a polymer of low molecular weight,

optionally, the small molecular organic solvent includes one or more selected from an alcohol amine, an alcohol, or a nitrile, and optionally, the number of carbon atoms of the alcohol amine is 1-16, optionally 2-6; and

optionally, the polymer of low molecular weight comprises one or more selected from a maleic anhydride-styrene copolymer, polyvinylpyrrolidinone, or polysiloxane, and optionally, the weight average molecular weight of the polymer of low molecular weight is below 6,000 and is optionally 3,000-6,000.

**12.** The positive electrode plate according to any one of claims 9-11, wherein the dispersant comprises a second polymer, and the second polymer comprises:

a fifth monomer unit represented by formula 7;

a sixth monomer unit that is at least one selected from the group consisting of a monomer unit represented by formula 8 and a monomer unit represented by formula 9; and

a seventh monomer unit that is at least one selected from the group consisting of a monomer unit represented by formula 10 and a monomer unit represented by formula 11;

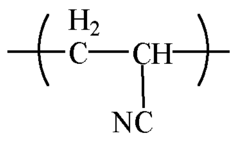

formula 7

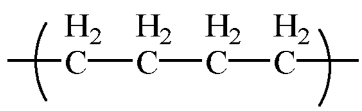

formula 8

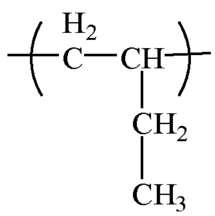

formula 9

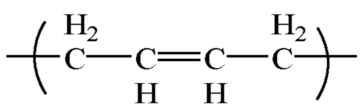

formula 10,

and

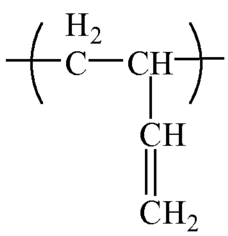

formula 11.

**13.** The positive electrode plate according to claim 12, wherein, based on the total mass of the second polymer,

a percentage mass content of the fifth monomer unit is M5, wherein M5 is 10%-55%, optionally 25%-55%; and/or

a percentage mass content of the sixth monomer unit is M6, wherein M6 is 40%-80%, optionally 40%-70%; and/or

a percentage mass content of the seventh monomer unit is M7, wherein M7 is 0%-10%, optionally 0.001%-2%.

**14.** The positive electrode plate according to claim 13, wherein M7/(M6+M7) is 0%-5%, optionally 0.001%-1%.

**15.** The positive electrode plate according to any one of claims 12-14, wherein

the second polymer is hydrogenated nitrile butadiene rubber; and/or
the weight average molecular weight of the second polymer is 50,000-500,000, optionally 150,000-350,000.

**16.** The positive electrode plate according to any one of claims 9-15, wherein, based on a total mass of the positive electrode film layer,

a percentage mass content of the dispersant is Y1, wherein Y1 is 0.05%-1%, optionally 0.1%-0.5%; and/or
a percentage mass content of the infiltrant is Y2, wherein Y2 is 0.05%-2%, optionally 0.2%-0.8%.

**17.** The positive electrode plate according to claim 16, wherein Y1/Y2 is 0.05-20, optionally 0.1-1, further 0.3-0.8.

**18.** The positive electrode plate according to any one of claims 9-17, wherein in the positive electrode plate, a mass ratio of the first polymer to the second polymer is 1.5-5, optionally 2-3.

**19.** The positive electrode plate according to any one of claims 1-18, wherein the positive electrode active material comprises $Li_{1+x}Fe_{1-y}A_yP_{1-z}R_zO_4$,

$$-0.100 \leq x \leq 0.100;$$

$0 \leq y \leq 1$, optionally $0.001 \leq y \leq 0.500$;
$0 \leq z \leq 0.100$, optionally $0.001 \leq z \leq 0.100$;
the A is selected from one or more of Zn, Al, Na, K, Mg, Mo, W, Ti, V, Zr, Mn, Ni, Co, Ga, Sn, Sb, Nb, and Ge, and is optionally one or more of Mn, Ti, V, Ni, Co, and Mg, and
the R is selected from one or more of B, Si, N, and S.

**20.** The positive electrode plate according to any one of claims 1-19, wherein a surface of the positive electrode active material is coated with carbon.

**21.** The positive electrode plate according to any one of claims 1-20, wherein a volume particle size Dv50 of the positive electrode active material is 0.3 μm-1.5 μm.

**22.** A secondary battery, comprising the positive electrode plate according to any one of claims 1-21.

**23.** An electrical apparatus, comprising the secondary battery according to claim 22.

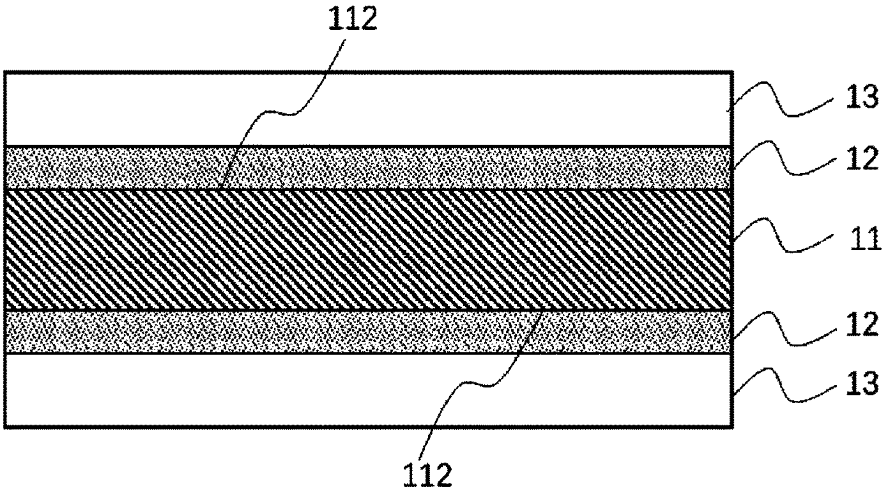


FIG. 1

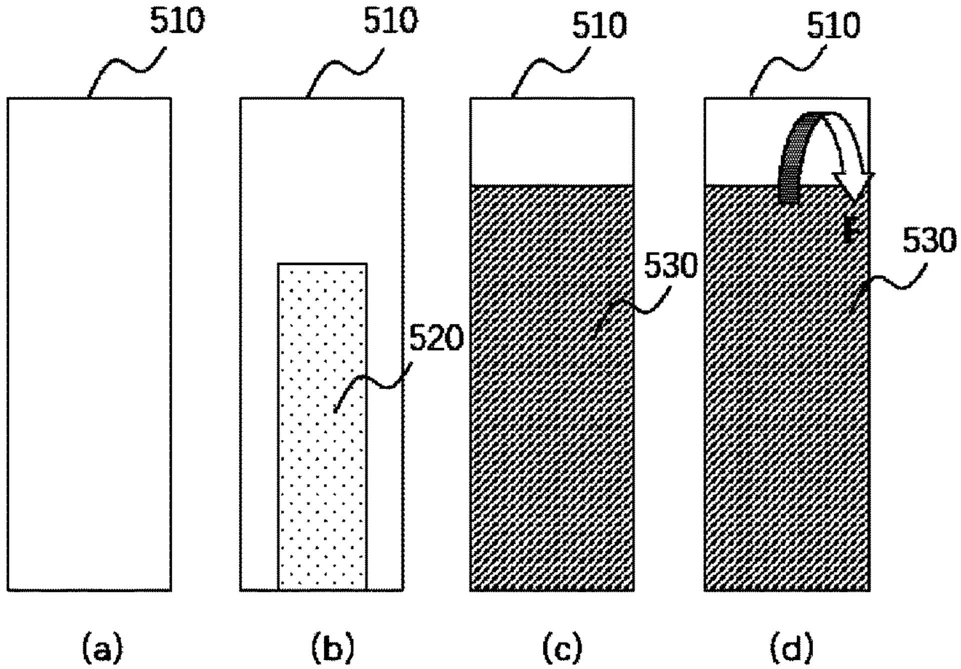


FIG. 2

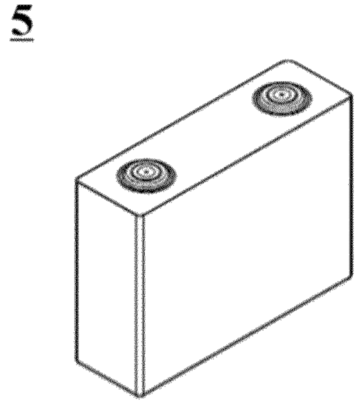


FIG. 3

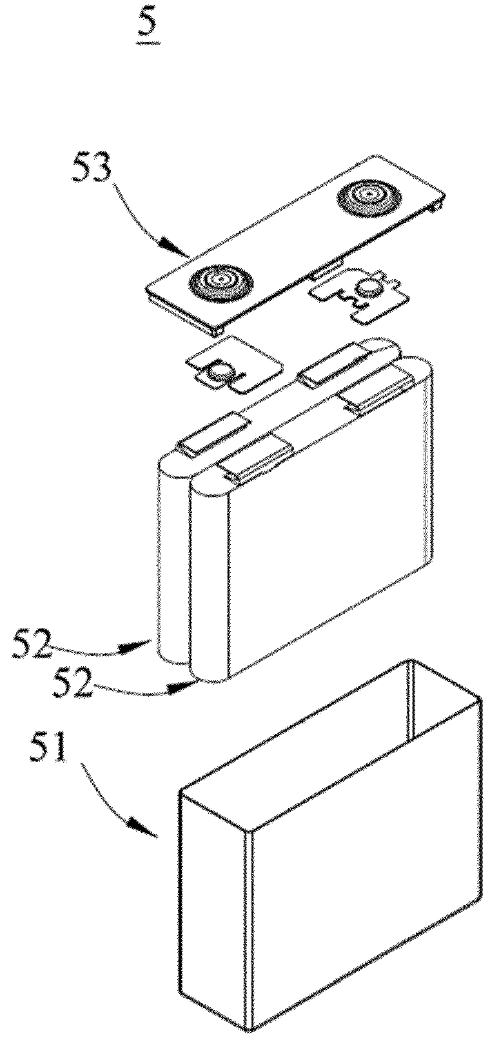


FIG. 4

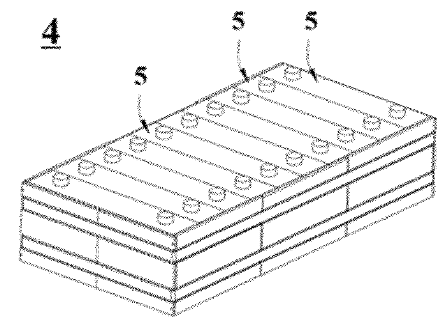


FIG. 5

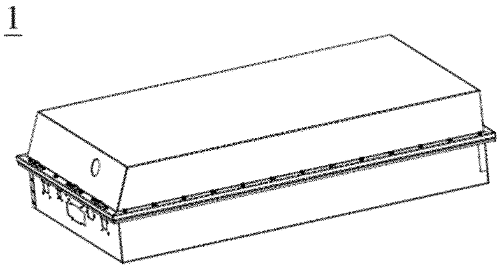


FIG. 6

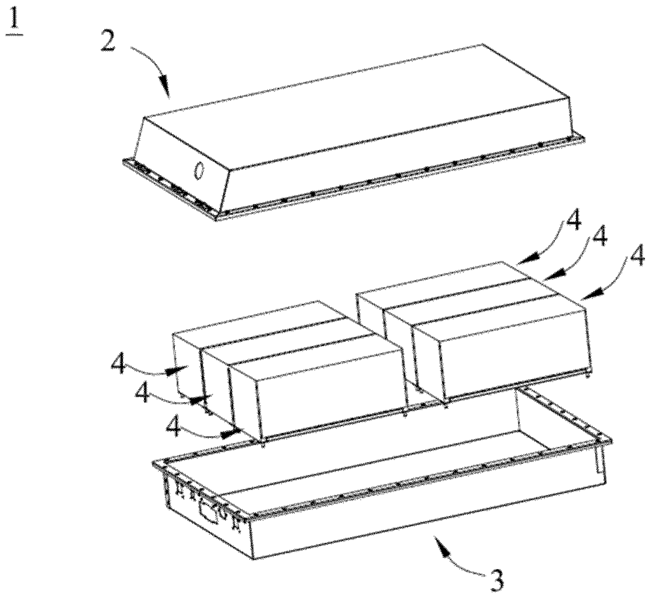


FIG. 7

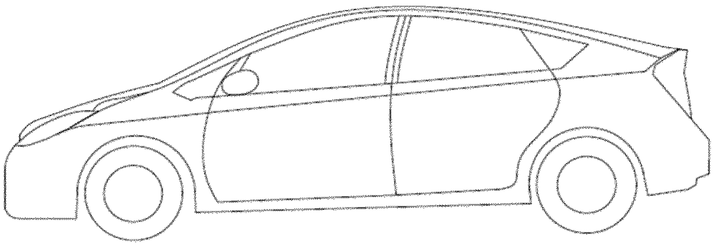

FIG. 8

**INTERNATIONAL SEARCH REPORT**

International application No.
**PCT/CN2023/076367**

**A. CLASSIFICATION OF SUBJECT MATTER**

H01M4/13(2010.01)i;H01M4/62(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 集流体, 活性材料, 比表面积, 涂布, 涂层, 氢化丁腈橡胶, 氢化羧基丁腈橡胶, positive electrode, current collector, active material, specific surface area, BET, coat, coating layer, hydrogenated nitrile butadiene rubber, HNBR, hydrogenated carboxylated nitrile butadiene rubber, HXNBR

**C. DOCUMENTS CONSIDERED TO BE RELEVANT**

| Category* | Citation of document, with indication, where appropriate, of the relevant passages | Relevant to claim No. |
|---|---|---|
| Y | CN 102484239 A (TOYOTA MOTOR CORP.) 30 May 2012 (2012-05-30)<br>description, paragraphs 49-147 | 1-23 |
| Y | JP H1173943 A (TOSHIBA CORP.) 16 March 1999 (1999-03-16)<br>description, paragraphs 14-53, and figure 2 | 1-23 |
| Y | CN 114174384 A (LG CHEMICAL LTD.) 11 March 2022 (2022-03-11)<br>description, paragraphs 29-170 | 9-18 |
| Y | CN 107251277 A (ELEXCEL CORP., LTD.) 13 October 2017 (2017-10-13)<br>description, paragraphs 25-81 | 1-23 |
| Y | CN 110431697 A (LG CHEMICAL LTD.) 08 November 2019 (2019-11-08)<br>description, paragraphs 24-84 | 9-18 |
| A | CN 112703619 A (DAIKIN INDUSTRIES LTD.) 23 April 2021 (2021-04-23)<br>entire document | 1-23 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2023** | **15 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/076367**

| Patent document cited in search report | | | Publication date (day/month/year) | Patent family member(s) | | | Publication date (day/month/year) |
|---|---|---|---|---|---|---|---|
| CN | 102484239 | A | 30 May 2012 | KR | 20120061952 | A | 13 June 2012 |
| | | | | KR | 101438980 | B1 | 11 September 2014 |
| | | | | WO | 2011039890 | A1 | 07 April 2011 |
| | | | | JPWO | 2011039890 | A1 | 21 February 2013 |
| | | | | JP | 5445874 | B2 | 19 March 2014 |
| | | | | US | 2012189914 | A1 | 26 July 2012 |
| | | | | US | 9362554 | B2 | 07 June 2016 |
| | | | | CN | 102484239 | B | 08 April 2015 |
| JP | H1173943 | A | 16 March 1999 | | None | | |
| CN | 114174384 | A | 11 March 2022 | WO | 2021141376 | A1 | 15 July 2021 |
| | | | | JP | 2022536304 | A | 15 August 2022 |
| | | | | US | 2022384812 | A1 | 01 December 2022 |
| | | | | EP | 3978564 | A1 | 06 April 2022 |
| | | | | KR | 20210089093 | A | 15 July 2021 |
| CN | 107251277 | A | 13 October 2017 | EP | 3255708 | A1 | 13 December 2017 |
| | | | | EP | 3255708 | B1 | 13 November 2019 |
| | | | | WO | 2016133144 | A1 | 25 August 2016 |
| | | | | JP | 2016154112 | A | 25 August 2016 |
| | | | | JP | 6567289 | B2 | 28 August 2019 |
| CN | 110431697 | A | 08 November 2019 | KR | 20180107758 | A | 02 October 2018 |
| | | | | KR | 102323808 | B1 | 10 November 2021 |
| | | | | WO | 2018174619 | A1 | 27 September 2018 |
| | | | | US | 2020295347 | A1 | 17 September 2020 |
| | | | | US | 11283058 | B2 | 22 March 2022 |
| | | | | CN | 110431697 | B | 19 July 2022 |
| CN | 112703619 | A | 23 April 2021 | WO | 2020071336 | A1 | 09 April 2020 |
| | | | | US | 2021376319 | A1 | 02 December 2021 |
| | | | | TW | 202021181 | A | 01 June 2020 |
| | | | | TWI | 754840 | B | 11 February 2022 |
| | | | | KR | 20210041097 | A | 14 April 2021 |
| | | | | KR | 102342989 | B1 | 24 December 2021 |
| | | | | JP | 2020057606 | A | 09 April 2020 |
| | | | | JP | 6733796 | B2 | 05 August 2020 |
| | | | | EP | 3863081 | A1 | 11 August 2021 |

Form PCT/ISA/210 (patent family annex) (July 2022)